(19) Europäisches Patentamt
European Patent Office
Office européen des brevets

(11) **EP 3 054 552 B1**

(12) **EUROPEAN PATENT SPECIFICATION**

(45) Date of publication and mention
of the grant of the patent:
**18.03.2020 Bulletin 2020/12**

(21) Application number: **13894732.0**

(22) Date of filing: **30.09.2013**

(51) Int Cl.:
*H02J 7/00* (2006.01)      *B60L 53/14* (2019.01)
*B60L 58/12* (2019.01)      *B60L 53/63* (2019.01)
*B60L 53/64* (2019.01)      *B60L 53/65* (2019.01)
*B60L 53/66* (2019.01)

(86) International application number:
**PCT/KR2013/008759**

(87) International publication number:
**WO 2015/046656 (02.04.2015 Gazette 2015/13)**

(54) **APPARATUS AND METHOD FOR ECONOMICALLY CHARGING ELECTRONIC VEHICLE**

VORRICHTUNG UND VERFAHREN ZUR ÖKONOMISCHEN AUFLADUNG EINES
ELEKTRONISCHEN FAHRZEUGS

APPAREIL ET PROCÉDÉ PERMETTANT DE RECHARGER DE MANIÈRE ÉCONOMIQUE UN
VÉHICULE ÉLECTRONIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.08.2016 Bulletin 2016/32**

(73) Proprietor: **Korea Electric Power Corporation
Seoul 135-791 (KR)**

(72) Inventors:
• **KIM, Sang Ok
Daejeon 305-760 (KR)**
• **HAN, Seung Ho
Daejeon 305-760 (KR)**
• **SONG, Taek Ho
Daejeon 305-760 (KR)**

(74) Representative: **Zacco Sweden AB
P.O. Box 5581
114 85 Stockholm (SE)**

(56) References cited:
EP-A2- 2 537 229          WO-A2-2009/012018
JP-A- 2012 161 241        JP-A- 2012 161 241
JP-A- 2012 165 545        JP-A- 2013 031 239
KR-A- 20120 072 192       KR-B1- 101 233 436
KR-B1- 101 233 436        US-A1- 2011 210 698
US-A1- 2013 093 393

**Description**

TECHNICAL FIELD

The present invention relates to an apparatus and method for economically charging an electric vehicle, and more specifically, to an apparatus and method for economically charging an electric vehicle which calculates a charge slope, which is a degree in which a battery of an electric vehicle is charged per hour, and a charge time through actual measurement, and controls a charge schedule within a range of the total charge time by considering a unit charging power rate that is different for each time slot so that the sum of charging power rates until the battery is fully charged is the minimum.

BACKGROUND ART

Electric vehicles are vehicles, which are driven using electrical energy as power. The electric vehicles have advantages of not producing an exhaust gas and generating a low noise, but have to obtain electrical energy, which is a power source, from a battery due to their mobility.

Since the electric vehicles gain momentum by driving an electric motor using a charged battery as a power source, charging is essential for using the electric vehicles. Consequently, as a gasoline or gas vehicle receives a fuel at a gas station, the electric vehicles also have to charge their batteries at a charging station.

Here, a power rate in accordance with a charge amount is calculated according to a unit power rate in accordance with the charge amount, and the charge amount is calculated by multiplying a charger output by a charge time.

Since a charger output is fixed in accordance with a vehicle and a battery, a power rate is calculated to be lower as a charge time is shorter.

However, since the unit power rate may be set differently in accordance with a power demand in each time slot, the charge time and the power rate are not always proportional to each other, and the power rate can be reduced if a battery is charged in a time slot in which a power demand is low and a unit power rate is set to be low.

US2013/093393 discloses a charging control apparatus for electrical vehicles wherein an electric fee table is used to determine charging on/off instances. The disclosed power control addresses aspects of a multi-battery system, wherein charging of a vehicle battery may be made from a stationary battery, e.g., a home battery, or from the grid based on the fee table information.

KR101 233 436 discloses a battery charging device for electrical vehicles wherein a battery management unit measures charging rate of a battery and generates charging rate information to control charger.

US2011/210698 discloses time-scheduled charging in an on-board charging control apparatus that controls a charger to charge a vehicle battery according to a charging schedule.

A further document in the related art is Korean Unexamined Patent Application Publication No. 1997-0024439 (published on May 30th, 1997, Title : Charge Controller of Electric Vehicle).

SUMMARY OF THE INVENTION

The present invention is directed to providing an apparatus and method for economically charging an electric vehicle, the apparatus and method capable of calculating a charge slope, which is a degree in which a battery of an electric vehicle is charged per hour, and a charge time through actual measurement, and controlling a charge schedule within a range of the total charge time by considering a unit charge power rate that is different for each time slot so that the sum of charge power rates until the battery is fully charged is the minimum, thereby reducing a load of an electric power system for charging an electric vehicle in a peak power time slot in which a power rate is high.

According to an aspect of the present invention, there is provided an apparatus for economically charging an electric vehicle according to claim 1.

According to the present invention, the apparatus may further include a communication unit configured to communicate the charge state information and the charge schedule to an external server.

According to the present invention, the charge state information may include at least one of an end-of-charge time and an economically charging selection signal.

According to the present invention, the control unit may include a schedule computation unit configured to calculate the charge slope and compute the charge schedule; a charge control unit configured to control the charger to charge a battery of the vehicle during a charge continuation time in the charge schedule and to postpone charging and wait during a postponing time in the charging schedule; and a cost calculation unit configured to calculate a cost in accordance with power consumed by the charger.

According to the present invention, the control unit may control the charger so that the charger charges the battery for a preset predetermined amount of time, and calculate the charge slope based on the remaining charge amount of the battery before and after the battery is charged for the predetermined amount of time.

According to the present invention, the charge schedule may be set such that the battery is fully charged within the end-of-charge time, and the power rate required to fully charge the battery when charging the battery in accordance with the charge schedule may be the minimum.

In addition, according to another aspect of the present invention, there is provided a method for economically charging an electric vehicle according to claim 5.

According to the present invention, the method may further include a step of calculating a power rate corresponding to power consumed in charging the battery by the control unit.

According to the present invention, the charge state information may include at least one of an end-of-charge time and whether economical charging is selected.

According to the present invention, in the step of calculating the charge slope, the control unit may control the charger to charge the battery for the preset predetermined amount of time, and calculate the charge slope based on the remaining charge amount of the battery before and after the battery is charged for the predetermined amount of time.

According to the present invention, in the step of computing the charge schedule, the charge schedule may be set such that the battery is fully charged within the end-of-charge time, and the power rate required to fully charge the battery when charging the battery in accordance with the charge schedule is the minimum.

According to the present invention, in the step of controlling the charger, the control unit may control the charger to charge the battery of the vehicle during a charge continuation time in the charge schedule and to postpone charging and wait during a postponing time in the charging schedule.

According to the present invention, the charge slope, which is a degree in which the battery of the electric vehicle is charged per hour, and the charge time are calculated through actual measurement, and the charge schedule is controlled within the total charge time by considering the unit charging power rate that is different for each time slot so that the sum of charging power rates until the battery is fully charged is the minimum, thereby saving the power rate when charging the electric vehicle and reducing the load of the electric power system for charging the electric vehicle in the peak power time slot in which the power rate is high.

BRIEF DESCRIPTION OF THE DRAWINGS

FIG. 1 is a block diagram of configurations of an apparatus for economically charging an electric vehicle according to an embodiment of the present invention.
FIG. 2 is a graph illustrating a correlation between time and a remaining charge amount when economically charging according to an embodiment of the present invention.
FIG. 3 is a flow chart illustrating steps in a method for economically charging the electric vehicle according to an embodiment of the present invention.
FIG. 4 is a flow chart illustrating an operation of computing a charge schedule in the method for economically charging the electric vehicle according to an embodiment of the present invention.

DETAILED DESCRIPTION

Hereinafter, the apparatus and method for economically charging an electric vehicle according to the present invention will be described in detail with reference to the accompanying drawings. In this process, the thickness of lines or the size of elements shown in the drawings may be exaggerated for clarity and convenience. In addition, the terms used herein are defined by considering functions in the present invention, and may be different in accordance with an intention or practice of a user or an operator. Therefore, the terms should be defined based on the overall content of the present specification.

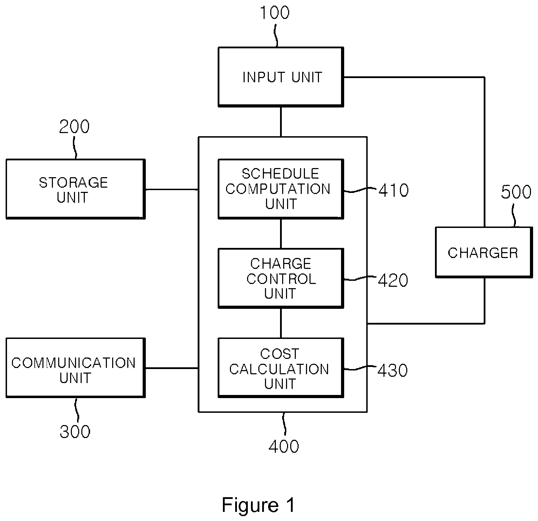

FIG. 1 is a block diagram of configurations of an apparatus for economically charging an electric vehicle.

According to an embodiment of the present invention, as depicted in FIG. 1, the apparatus for economically charging the electric vehicle may include an input unit 100, a storage unit 200, a communication unit 300, and a control unit 400.

The input unit 100 receives an input of charge state information of a vehicle from a charger 500.

Here, the charge state information may include at least one of a remaining charge amount of a battery, an end-of-charge time, and an economically charging selection signal.

The remaining charge amount of the battery indicates a percentage in which the battery is currently charged with respect to a fully charged state. The remaining charge amount of the battery may be used by the control unit 400 in calculating the charge slope and controlling the charger 500 to charge the battery.

The end-of-charge time indicates a time limit by which the charging of the battery should be completed. The end-of-charge time may be used in computing the charge schedule by the control unit 400.

The economically charging selection signal is a signal indicating that a user has selected to charge the battery of the vehicle by the method for economically charging an electric vehicle according to the present invention.

The user may or may not select economical charging in the charger 500, and when the user does not select the economical charging, the apparatus for economically charging an electric vehicle of the present embodiment may control the charger 500 to charge the battery by a conventional method of charging the battery without considering a difference in power rates for every time slot until the battery is fully charged.

Meanwhile, when the user selects the economical charging, the apparatus for economically charging an electric vehicle of the present embodiment may control the charger 500 to charge the battery according to the economically charging method to be described below.

The storage unit 200 stores the charge state information and the charge schedule, and provides the control unit 400, an external server (not shown) connected to an electric power system, and so on with the charge state information and the charge schedule as needed.

The communication unit 300 communicates the charge state information and the charge schedule with the external server (not shown).

The control unit 400 calculates the charge slope based on the actually measured charge state information of the vehicle, computes the charge schedule based on the charge slope and the power rate for each time slot, controls the charger 500 in accordance with the charge schedule, and calculates the power rate for charging.

As depicted in FIG. 1, the control unit 400 may include a schedule computation unit 410, a charge control unit 420, and a cost calculation unit 430.

The schedule computation unit 410 calculates the charge slope.

The charge slope indicates the remaining charge amount charged per unit time when the battery is charged.

The schedule computation unit 410 of the control unit 400 is capable of controlling the charger 500 to charge the battery for a preset predetermined amount of time, and calculating the charge slope based on the remaining charge amount of the battery before and after the battery is charged for the predetermined amount of time.

Here, the predetermined amount of time is an amount of time that is large enough to calculate the charge slope of the battery of the vehicle connected to the charger 500, but may be set as a short amount of time that is large enough to tentatively calculate the charge slope before starting the actual charging. For example, the predetermined amount of time may be set to ten minutes.

The charge slope may be calculated by Equation 1 below.

Equation 1

$$K = \frac{S_2 - S_1}{T_c}$$

In Equation 1, K refers to the charge slope, $S_2$ refers to the remaining charge amount of the battery after the battery is charged for the predetermined amount of time, $S_1$ refers to the remaining charge amount of the battery before the battery is charged for the predetermined amount of time, and $T_c$ refers to the predetermined amount of time.

For example, if the predetermined amount of time is set to ten minutes, $S_2$ is measured to be 10%, and $S_1$ is measured to be 5%, the charge slope is calculated as 30% per hour.

The schedule computation unit 410 also computes the charge schedule.

The charge schedule represents a schedule that sets a time slot to charge the battery and a time slot to postpone charging of the battery and wait among time slots until the end-of-charge time.

The power rate of power supplied by the electric power system may be set differently in accordance with a time slot. For example, the power rate may be set high at a peak time slot in which a power demand is high, and the power rate may be set low at a midnight time slot in which the power demand is low.

In this case, if the battery is intensively charged at the time slot in which the power rate is set low among the time slots before the end-of-charge time, not only the power rate, but also the power demand to charge the battery of the electric vehicle at the peak time slot in which the power demand is high can be reduced, thereby dispersing the power demand from the peak time slot to other time slots.

Here, the schedule computation unit 410 of the control unit 400 computes the charge schedule so that the battery is fully charged within the end-of-charge time and the power rate required to fully charge the battery when charging the battery in accordance with the charge schedule is the minimum.

First, the schedule computation unit 410 can calculate a required charge amount that is required to fully charge the battery by Equation 2 below.

Equation 2

$$\Delta S = 100 - S_2$$

In Equation 2, $\Delta S$ refers to a required charge amount. In other words, the schedule computation unit 410 can calculate the required charge amount that is required to fully charge the battery by subtracting the remaining amount of the battery after tentatively charging the battery for the predetermined amount of time from 100%.

In addition, the schedule computation unit 410 can calculate the total charge time required to fully charge the required charge amount by Equation 3 below.

Equation 3

$$T_t = \frac{\Delta S}{K}$$

In Equation 3, $T_t$ refers to the total charge time. In other words, the schedule computation unit 410 can calculate the total charge time by dividing the required charge amount by the charge slope.

Then, the schedule computation unit 410 assigns time slots corresponding to the amount of total charge time among time slots from the current time to the end-of-charge time as the charge continuation time.

Here, the schedule computation unit 410 first assigns time slots in which the power rate is the lowest among the time slots from the current time to the end-of-charge time as the charge continuation time.

If a duration of the time slots in which the power rate is the lowest exceeds the amount of unassigned time among the total charge time, only the time required to completely assign the amount of time as much as the total charge time may be assigned as the charge continuation time.

If time slots as long as the total charge time cannot be completely assigned as the charge continuation time even if all of the time slots in which the power rate is the lowest are used, the schedule computation unit 410 assigns a time slot in which the power rate is the next lowest as the charge continuation time.

After completely assigning the amount of time corresponding to the total charge time as the charge continuation time as above, time slots unassigned as the charge continuation time among the time slots from the current time to the end-of-charge time are assigned as the postponing time.

In addition, since an error may occur due to the time required to compute the charge schedule if an initial charge continuation time continues right after a predetermined amount of tentative charge time required to calculate the charge slope, the charge continuation time may be assigned to start after a preset predetermined time interval after calculating the charge slope. The predetermined time interval may be set as one minute.

As above, the schedule computation unit 410 can calculate the charge schedule so that the power rate required to fully charge the battery is the minimum.

The charge control unit 420 controls the charger 500 to charge the battery of the vehicle during the charge continuation time of the charge schedule, and to postpone the charging and wait during the postponing time of the charge schedule.

The control unit 400 may control the charger 500 to charge the battery of the vehicle in accordance with the charge schedule that achieves the lowest power rate provisionally computed as above.

The cost calculation unit 430 calculates a power rate corresponding to the power consumed by the charger 500.

After the charger 500 fully charges the battery of the vehicle, the cost calculation unit 430 can calculate the power rate corresponding to the power consumed in the charging in accordance with the charge schedule, and can enable a user to pay the calculated rate.

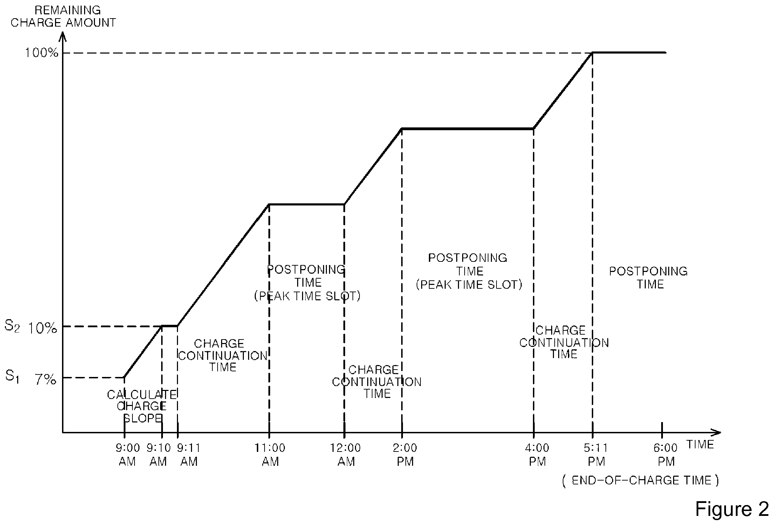

FIG. 2 is a graph illustrating a correlation between the time and the remaining charge amount when economically charging according to an embodiment of the present invention.

For example, the peak time slots, in which the power demand is high, of a day may be from 11:00 AM to 12:00 PM and from 2:00 PM to 4:00 PM, and the power rates at the peak time slots may be set higher than those at other time slots. In addition, the end-of-charge time input by a user through the charger 500 may be 6:00 PM.

If charging of a vehicle starts at 9:00 AM, which is the current time, the apparatus for economically charging an electric vehicle of the present embodiment may first tentatively charge the battery of the vehicle from 9:00 AM for a predetermined amount of time, for example, until 9:10 AM, which is ten minutes after the current time to calculate the charge slope.

Here, if the remaining charge amount at 9:00 AM is measured to be 7% and the remaining charge amount at 9:10 AM is measured to be 10%, the charge slope may be calculated as 18% per hour by the Equation 1.

In addition, in this case, the required charge amount is calculated as 90% by Equation 2, and the total charge time is calculated as five hours by Equation 3.

As mentioned above, the schedule computation unit 410 may assign the charge continuation time so that the initial charge continuation time starts after the preset predetermined time interval after calculating the charge slope. Here, the time interval may be one minute, and the charge continuation time can be assigned from 9:11 AM, which is one minute after calculating the charge slope.

Consequently, the schedule computation unit 410 assigns five hours among time slots from 9:11 AM to 6:00 PM as the charge continuation time. Here, since a time slot in which the power rate is the lowest is not a peak time slot, a time slot from 9:11 AM to 11:00 AM is first assigned as the charge continuation time.

Since the total charge time, five hours, is not completely assigned yet, a time slot from 12:00 PM to 2:00 PM, in which the power rate is low, is assigned as the charge continuation time.

However, since the total charge time, five hours, is still not completely assigned yet, a time slot from 4:00 PM to 5:11 PM corresponding to the total charge time among a time slot from 4:00 PM to 6:00 PM, in which the power rate is low, is assigned as the charge continuation time.

Here, time slots from 11:00 AM to 12:00 PM, from 2:00 PM to 4:00 PM, and from 5:11 PM to 6:00 PM which are unassigned as the charge continuation time are assigned as the postponing time.

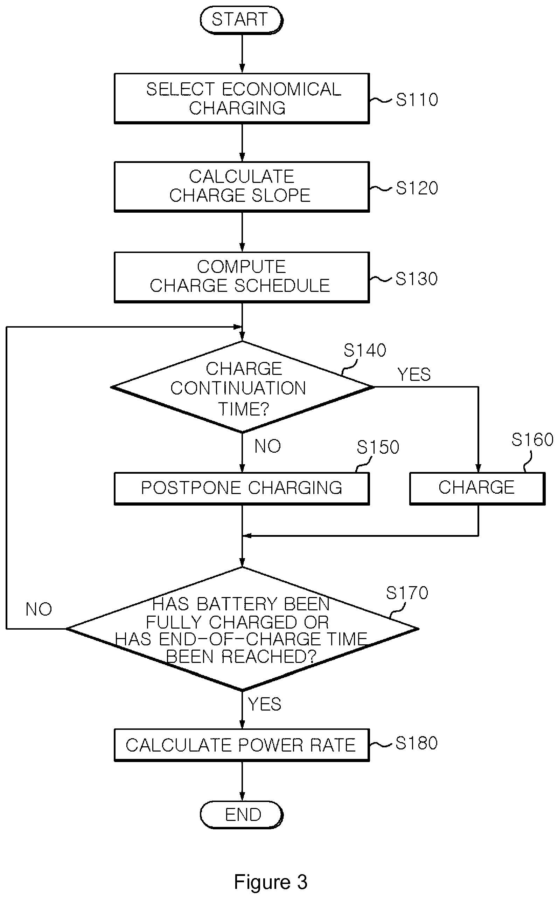

FIG. 3 is a flow chart illustrating a method for economically charging the electric vehicle according to an embodiment of the present invention. The method for economically charging an electric vehicle according to an embodiment of the present invention will be described with reference to FIG. 3.

First, the input unit 100 receives an economically charging selection signal from the charger 500 (S110).

The economically charging selection signal is a signal indicating that a user has selected to charge the vehicle using the economically charging method of the present embodiment.

The user may or may not select the economical charging, and when the user does not select the economical charging, the apparatus for economically charging an electric vehicle of the present embodiment may control the charger 500 to charge the battery by a conventional method of charging the battery without considering a difference in power rates for every time slot until the battery is fully charged.

Then, the control unit 400 calculates the charge slope based on the actually measured charge state information of the vehicle received from the input unit 100 (S120).

The charge slope may indicate the remaining charge amount charged per unit time when the battery is charged.

The control unit 400 may control the charger 500 to charge the battery for a preset predetermined amount of time. Here, the actually measured charge state information of the vehicle may include the remaining charge amount of the battery before and after the battery is charged for the predetermined amount of time.

Here, the control unit 400 can calculate the charge slope by the Equation 1.

Next, the control unit 400 computes the charge schedule based on the charge slope and the power rate for each time slot (S130).

As mentioned above, the charge schedule represents the schedule that sets the time slot to charge the battery and the time slot to postpone the charging of the battery and wait among the time slots until the end-of-charge time.

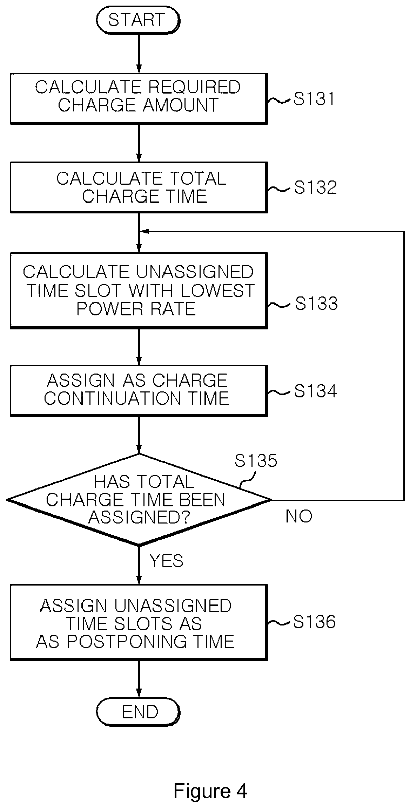

To be more specific in terms of the step S130, as depicted in FIG. 4, the control unit 400 may first calculate the required charge amount that is required to fully charge the battery by Equation 2 (S131).

Then, the control unit 400 may calculate the total charge time required to fully charge the required charge amount by Equation 3 (S132).

Next, the control unit 400 calculates a time slot in which the power rate is the lowest among time slots unassigned as the charge continuation time from the current time to the end-of-charge time (S133).

Then, the control unit 400 first assigns the calculated time slot in which the power rate is the lowest as the charge continuation time (S134).

Here, if the duration of the calculated time slot exceeds the amount of unassigned time among the total charge time, only the time required to completely assign the amount of time as much as the total charge time may be assigned as the charge continuation time.

Next, the control unit 400 determines whether the amount of time as much as the total charge time has completely been assigned as the charge continuation time (S135).

If the amount of time as much as the total charge time is not completely assigned yet, the control unit 400 may repeat the steps S134 and S135 until the amount of time as much as the total charge time is completely assigned as the charge continuation time.

By the method above, the control unit 400 may first assign the time slots in which the power rate is low among the time slots from the current time to the end-of-charge time as the charge continuation time.

Then, the control unit 400 assigns time slots unassigned as the charge continuation time as the postponing time (S136) and follows the process shown in FIG. 3 from the step S140.

In accordance with the process shown in FIG. 4, the control unit 400 is capable of computing the charge schedule in which the battery can be fully charged and the power rate required to fully charge the battery is the minimum.

Then, the control unit 400 determines whether the current time slot is assigned as the charge continuation time in the charge schedule (S140).

If the current time slot is not assigned as the charge continuation time, the control unit 400 controls the charger 500 to postpone charging and wait (S150).

On the other hand, if the current time slot is assigned as the charge continuation time, the control unit 400 controls the charger 500 to charge the battery of the vehicle (S160).

Next, the control unit 400 determines whether the current time has reached the end-of-charge time or the battery of the vehicle is fully charged (S170).

If neither of the two has occurred, the charging in accordance with the charge schedule is continued. Thus, the control unit 400 repeats the steps S140 to S160 to control the charging in accordance with the charge schedule to be continued.

By the method above, the control unit 400 is capable of controlling the charger 500 to charge the battery of the vehicle in accordance with the charge schedule until the battery is fully charged or the end-of-charge time is reached.

If the end-of-charge time is reached or the battery is fully charged, the charging in accordance with the charge schedule is completed. Thus, the control unit 400 calculates the power rate corresponding to the power consumed in charging the battery (S180), and ends the process.

As mentioned above, according to the present invention, the charge slope, which is a degree in which a battery of an electric vehicle is charged per hour, and the charge time are calculated through actual measurement, and the charge schedule is controlled within the range of the total charge time by considering a unit charging power rate that is different for each time slot so that the sum of charging power rates until the battery is fully charged is the minimum, thereby reducing the power rate when charging the electric vehicle and reducing a load of a power system for charging an electric vehicle in a peak power time slot in which the power rate is high.

Although the present invention has been described with reference to the embodiments depicted in the accompanying drawings, the embodiments are only for illustrative purposes, and those of ordinary skill in the art will understand that the embodiments may be modified in various ways without departing from scope of the invention and thus other embodiments of the present invention are possible. Therefore, the scope of the present invention should be defined by the patent claims below.

**Claims**

1. An apparatus for economically charging an electric vehicle, the apparatus comprising:

   an input unit (100) configured to receive an input of charge state information of a vehicle from a charger, wherein the charge state information comprises a remaining charge amount of a battery;
   a storage unit (200) configured to store the charge state information and a charge schedule
   a control unit (400) configured to control the charger in accordance with the charge schedule,
   **characterized in that** the control unit is further configured to control the charger to charge the battery for a preset predetermined amount of time and to calculate a charge slope of the vehicle, wherein the charge slope is calculated based on remaining charge amount of the battery before and after the battery is charged for the predetermined amount of time; and to compute the charge schedule based on the charge slope and a power rate for each time slot, wherein the charge schedule is set such that the battery is fully charged within an end-of charge time, and the power rate required to fully charge the battery when charging the battery in accordance with the charge schedule is the minimum.

2. The apparatus according to claim 1, further comprising a communication unit (300) configured to communicate the charge state information and the charge schedule to an external server.

3. The apparatus according to claim 1 or 2, wherein the charge state information comprises at least one of: an end-of-charge time and an economically charging selection signal.

4. The apparatus according to any of claims 1-3, wherein the control unit (400) comprises:

   a schedule computation unit (410) configured to calculate the charge slope and compute the charge schedule;
   a charge control unit (420) configured to control the charger to charge a battery of the vehicle during a charge continuation time in the charge schedule and to postpone charging and wait during a postponing time in the charge schedule; and
   a cost calculation unit (430) configured to calculate a power rate in accordance with power consumed by the charger.

5. A method for economically charging an electric vehicle, the method comprising:

   receiving, by an input unit, an input of charge state information from a charger, wherein the charge state information comprises a remaining charge amount of a battery;
   storing, by a storage unit, the charge state information and a charge schedule;
   controlling, by a control unit, the charger to charge a battery of the vehicle in accordance with a charge schedule (160):
   **characterized in, that** the controlling further comprises:

      controlling, by the control unit, the charger to charge the battery for a preset predetermined amount and calculating a charge slope (120),
      wherein the charge slope is calculated based on the remaining charge amount of the battery before and after the battery is charged for the predetermined amount of time; and
      computing, by the control unit, a charge schedule (S130) based on the charge slope and a power rate for each time slot; wherein the charge schedule is set such that the battery is fully charged within an end-of-charge time and the power rate required to fully charge the battery when charging the battery in accordance with the charge schedule is the minimum.

6. The method according to claim 5, further comprising calculating, by the control unit, a power rate corresponding to power consumed in charging the battery.

7. The method according to claim 5 or 6, wherein the charge state information includes at least one of: an end-of-charge time and whether an economical charging is selected.

8. The method according to claim 7, wherein in the controlling of the charger, the control unit controls the charger to charge the battery of the vehicle during a charge continuation time in the charge schedule, and to postpone charging and wait during a postponing time in the charge schedule.

**Patentansprüche**

1. Vorrichtung zum ökonomischen Aufladen eines elektrischen Fahrzeugs, wobei die Vorrichtung umfasst:

   eine Eingabeeinheit (100), die konfiguriert ist, um eine Eingabe von Ladezustandsinformationen eines Fahrzeugs von einem Ladegerät zu empfangen,
   wobei die Ladezustandsinformationen eine verbleibende Lademenge einer Batterie umfassen;
   eine Speichereinheit (200), die konfiguriert ist, um die Ladezustandsinformationen und einen Ladezeitplan zu speichern
   eine Steuereinheit (400), die konfiguriert ist, um das Ladegerät gemäß dem Ladezeitplan zu steuern,
   **dadurch gekennzeichnet, dass** die Steuereinheit ferner konfiguriert ist, um das Ladegerät zu steuern, um die Batterie für eine voreingestellte vorbestimmte Zeitdauer zu laden und eine Ladesteilheit des Fahrzeugs zu berechnen, wobei die Ladesteilheit basierend auf einer verbleibenden Lademenge der Batterie vor und nach dem Laden der Batterie für die vorbestimmte Zeitdauer berechnet wird; und den Ladezeitplan basierend auf der Ladesteilheit und einer Leistungsrate für jeden Zeitschlitz zu berechnen, wobei der Ladezeitplan derart eingestellt ist, dass die Batterie innerhalb einer Ladeendzeit vollständig geladen wird, und die Leistungsrate, die erforderlich ist, um die Batterie vollständig zu laden, wenn die Batterie gemäß dem Ladezeitplan geladen wird, das Minimum ist.

2. Vorrichtung nach Anspruch 1, ferner umfassend eine Kommunikationseinheit (300), die konfiguriert ist, um Ladezustandsinformationen und den Ladezeitplan an einen externen Server zu kommunizieren.

3. Vorrichtung nach Anspruch 1 oder 2, wobei die Ladezustandsinformationen mindestens eines von Folgendem umfassen: ein Ladezeitende und ein Auswahlsignal zum wirtschaftlichen Laden.

4. Vorrichtung nach einem der Ansprüche 1 bis 3, wobei die Steuereinheit (400) Folgendes umfasst:

   eine Zeitplanberechnungseinheit (410), die konfiguriert ist, um die Ladesteilheit zu berechnen und den Ladezeitplan zu berechnen;
   eine Ladesteuereinheit (420), die konfiguriert ist, um das Ladegerät zu steuern, um eine Batterie des Fahrzeugs während einer Ladefortsetzungszeit im Ladezeitplan zu laden, und das Laden zu verschieben und während einer Verschiebungszeit im Ladezeitplan zu warten; und
   eine Kostenberechnungseinheit (430), die konfiguriert ist, um eine Leistungsrate gemäß dem vom Ladegerät verbrauchten Strom zu berechnen.

5. Verfahren zum ökonomischen Aufladen eines elektrischen Fahrzeugs, wobei das Verfahren umfasst:

   Empfangen einer Eingabe von Ladezustandsinformationen von einem Ladegerät durch eine Eingabeeinheit, wobei die Ladezustandsinformationen eine verbleibende Lademenge einer Batterie umfassen;
   Speichern der Ladezustandsinformationen und eines Ladezeitplans durch eine Speichereinheit;
   Steuern des Ladegeräts durch eine Steuereinheit, um eine Batterie des Fahrzeugs gemäß einem Ladezeitplan (S160) zu laden;
   **dadurch gekennzeichnet, dass** das Steuern ferner Folgendes umfasst:

   Steuern des Ladegeräts durch die Steuereinheit, um die Batterie mit einer voreingestellten vorbestimmten Menge zu laden und eine Ladesteilheit (S120) zu berechnen, wobei die Ladesteilheit basierend auf der verbleibenden Lademenge der Batterie vor und nach dem Laden der Batterie für die vorbestimmte Zeitdauer berechnet wird; und
   Berechnen eines Ladezeitplans (S130) durch die Steuereinheit basierend auf der Ladesteilheit und einer Leistungsrate für jeden Zeitschlitz; wobei der Ladezeitplan derart eingestellt ist, dass die Batterie innerhalb einer Ladeendzeit vollständig geladen wird und die Leistungsrate, die erforderlich ist, um die Batterie vollständig zu laden, wenn die Batterie gemäß dem Ladezeitplan geladen wird, das Minimum ist.

6. Verfahren nach Anspruch 5, ferner umfassend das Berechnen einer Leistungsrate, die dem verbrauchten Strom beim Laden der Batterie entspricht, durch die Steuereinheit.

7. Verfahren nach Anspruch 5 oder 6, wobei die Ladezustandsinformationen mindestens eines von Folgendem einschließen: ein Ladezeitende und ob ein wirtschaftliches Laden ausgewählt ist.

8. Verfahren nach Anspruch 7, wobei die Steuereinheit beim Steuern des Ladegeräts das Ladegerät steuert, um die Batterie des Fahrzeugs während einer Ladefortsetzungszeit im Ladezeitplan zu laden, und das Laden zu verschieben und während einer Verschiebezeit im Ladezeitplan zu warten.

**Revendications**

1. Appareil pour charger économiquement un véhicule électrique, l'appareil comprenant :

une unité d'entrée (100) configurée pour recevoir une entrée d'informations d'état de charge d'un véhicule depuis un chargeur, dans lequel les informations d'état de charge comprennent une quantité de charge restante d'une batterie ;
une unité de stockage (200) configurée pour stocker les informations d'état de charge et un programme de charge
une unité de commande (400) configurée pour commander le chargeur conformément au programme de charge,
**caractérisé en ce que** l'unité de commande est en outre configurée pour commander le chargeur pour charger la batterie pendant une période de temps prédéterminée prédéfinie et pour calculer une pente de charge du véhicule, dans lequel la pente de charge est calculée sur la base de la quantité de charge restante de la batterie avant et après que la batterie soit chargée pendant la période de temps prédéterminée ; et pour calculer le programme de charge sur la base de la pente de charge et d'une consommation d'énergie pour chaque créneau de temps, dans lequel le programme de charge est défini de sorte que la batterie est complètement chargée dans un délai de fin de charge, et que la consommation d'énergie requise pour charger complètement la batterie lors d'un chargement de la batterie conformément au programme de charge est minimale.

2. Appareil selon la revendication 1, comprenant en outre une unité de communication (300) configurée pour communiquer les informations d'état de charge et le programme de charge à un serveur externe.

3. Appareil selon la revendication 1 ou 2, dans lequel les informations d'état de charge comprennent au moins l'un parmi : un temps de fin de charge et un signal de sélection de chargement économique.

4. Appareil selon l'une quelconque des revendications 1 à 3, dans lequel l'unité de commande (400) comprend :

une unité de calcul de programme (410) configurée pour calculer la pente de charge et calculer le programme de charge ;
une unité de commande de charge (420) configurée pour commander le chargeur pour charger une batterie du véhicule pendant un temps de poursuite de charge dans le programme de charge et pour reporter le chargement et attendre pendant un temps de report dans le programme de charge ; et
une unité de calcul de coût (430) configuré pour calculer une consommation d'énergie conformément à l'énergie consommée par le chargeur.

5. Procédé pour charger économiquement un véhicule électrique, le procédé comprenant :

la réception, par une unité d'entrée, d'une entrée d'informations d'état de charge depuis un chargeur, dans lequel les informations d'état de charge comprennent une quantité de charge restante d'une batterie ;
le stockage, par une unité de stockage, des informations d'état de charge et d'un programme de charge ;
la commande, par une unité de commande, du chargeur pour charger une batterie du véhicule conformément à un programme de charge (S160) ;
**caractérisé en ce que** la commande comprend en outre :

la commande, par l'unité de commande, du chargeur pour charger la batterie pendant une quantité prédéterminée prédéfinie et le calcul d'une pente de charge (S120), dans lequel la pente de charge est calculée sur la base de la quantité de charge restante de la batterie avant et après que la batterie soit chargée pendant la période de temps prédéterminée ; et
le calcul, par l'unité de commande, d'un programme de charge (S130) sur la base de la pente de charge et d'une consommation d'énergie pour chaque créneau de temps ; dans lequel le programme de charge est défini de sorte que la batterie est complètement chargée dans un délai de fin de charge et que la consommation d'énergie requise pour charger complètement la batterie lors du chargement de la batterie conformément au programme de charge est minimale.

6. Procédé selon la revendication 5, comprenant en outre le calcul, par l'unité de commande, d'une consommation d'énergie correspondant à l'énergie consommée pendant le chargement de la batterie.

7. Procédé selon la revendication 5 ou 6, dans lequel les informations d'état de charge incluent au moins l'un parmi : un temps de fin de charge et le fait de savoir si un chargement économique est sélectionné.

8. Procédé selon la revendication 7, dans lequel dans la commande du chargeur, l'unité de commande effectue la commande du chargeur pour charger la batterie du véhicule pendant un temps de poursuite de charge dans le programme de charge, et pour reporter le chargement et attendre pendant un temps de report dans le programme de charge.

Figure 1

Figure 2

Figure 3

START

CALCULATE REQUIRED
CHARGE AMOUNT ~S131

CALCULATE TOTAL
CHARGE TIME ~S132

CALCULATE UNASSIGNED
TIME SLOT WITH LOWEST
POWER RATE ~S133

ASSIGN AS CHARGE
CONTINUATION TIME ~S134

S135
HAS TOTAL
CHARGE TIME BEEN
ASSIGNED?

NO

YES

ASSIGN UNASSIGNED
TIME SLOTS AS
AS POSTPONING TIME ~S136

END

Figure 4

**EP 3 054 552 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013093393 A
- KR 101233436
- US 2011210698 A
- KR 19970024439